# EUROPEAN PATENT SPECIFICATION

(11) **EP 3 263 526 B1**
(45) Date of publication and mention of the grant of the patent: **22.04.2020**
(21) Application number: 16755508.5
(22) Date of filing: 23.02.2016
(51) Int. Cl.: C01G 23/047, C09D 17/00

(54) **PRODUCTION METHOD FOR LIQUID DISPERSION OF TITANIUM OXIDE PARTICLES**
VERFAHREN ZUR HERSTELLUNG EINER FLÜSSIGEN DISPERSION VON TITANOXIDTEILCHEN
PROCÉDÉ DE PRODUCTION DE DISPERSION LIQUIDE DE PARTICULES D'OXYDE DE TITANE

(30) Priority: 27.02.2015 JP 2015038945
(43) Date of publication of application: 03.01.2018
(73) Proprietor: Sakai Chemical Industry Co., Ltd., Sakai-shi, Osaka 590-8502 (JP)
(72) Inventor: MORITA Takanori, Sakai-shi Osaka 590-0985 (JP)
(74) Representative: J A Kemp LLP
(86) International application number: PCT/JP2016/055311
(87) International publication number: WO 2016/136764

(56) References cited:
- EP-A1- 2 206 682
- EP-A1- 2 607 318
- WO-A1-2010/095726
- WO-A1-2011/016353
- GB-A- 2 226 018
- JP-A- 2000 053 421
- JP-A- 2005 170 687
- JP-A- 2006 001 775
- S MAHATA ET AL.: 'Synthesis of TiO2 Nanoparticles by Hydrolysis and Peptization of Titanium Isopropoxide Solution' AIP CONFERENCE PROCEEDINGS vol. 1461, 01 January 2012, pages 225 - 228, XP055482476 DOI: 10.1063/1.4736892
- ALEXANDR VALENTINOVICH VINOGRADOV ET AL.: 'Effect of Acidic Peptization on Formation of Highly Photoactive Ti02 Films Prepared without Heat Treatment' J. AM. CERAM. SOC. vol. 97, no. 1, 01 January 2014, pages 290 - 294, XP055482483 DOI: 10.1111/JACE.12560

## Description

### TECHNICAL FIELD

The invention relates to a method for producing an aqueous dispersion and an alcohol dispersion of titanium oxide particles. More particularly, the invention relates to a method for producing an aqueous dispersion of titanium oxide particles which provides an alcohol dispersion of titanium oxide particles in which the dispersion diameter of titanium oxide particles in the aqueous dispersion and the transparency of the aqueous dispersion are substantially maintained.

The invention further relates to a method for producing an alcohol dispersion of titanium oxide particles in which the dispersion diameter of titanium oxide particles in the aqueous dispersion and the transparency of the aqueous dispersion are substantially maintained. The method uses the aqueous dispersion of titanium oxide particles as a starting material, whose dispersion medium is replaced by an alcohol, and the dispersion diameter of titanium oxide particles and the transparency of the aqueous dispersion of titanium oxide particles are substantially maintained in the alcohol dispersion of titanium oxide particles thus obtained.

Also disclosed is an aqueous dispersion and an alcohol dispersion of titanium oxide particles obtained by the method mentioned above.

### BACKGROUND OF THE INVENTION

Dispersions of particles of an inorganic oxide such as silica, alumina, zinc oxide, tin oxide, zirconia, and titania are employed in various industrial fields, particularly in the field of optics for modulating refractive index. Among those inorganic oxide particles, titania particles are employed preferably for increasing the refractive index of an optical material because they have a high refractive index.

As such a dispersion of inorganic oxide particles, an aqueous dispersion whose dispersion medium is water has been conventionally used. However, most of the optical material applications such as optical film production utilize such an aqueous dispersion usually as being mixed with resin components, and such an aqueous dispersion is kneaded only with difficulty in particular with a water-insoluble resin component. Accordingly, an organic dispersion whose dispersion medium is an organic solvent is becoming highly demanded in these days.

Although the inorganic oxide particles including titanium oxide particles are generally dispersible satisfactorily in aqueous solvents, but are poorly dispersible generally in organic solvents.

Such being the case, in recent years, there has been proposed a method for producing an organic dispersion of titanium oxide particles of which dispersion medium is a lipophilic organic solvent. According to the method, an aqueous slurry of titanium oxide particles is obtained; titanium oxide particles in the aqueous slurry are deflocculated with an acid in an amount of 15-100 parts by mole per 100 parts by mole of titanium oxide to obtain an aqueous dispersion of titanium oxide particles; water, that is, a dispersion medium of the aqueous dispersion is replaced by an alcohol to obtain an alcohol dispersion of titanium oxide particles; and then the alcohol, that is, a dispersion medium of the alcohol dispersion, is replaced by a more lipophilic organic solvent (See Patent Literature 1).

However, the above-mentioned method of obtaining an alcohol dispersion of titanium oxide particles has a following problem. Namely, when the titanium oxide particles in the aqueous slurry are deflocculated with an acid to obtain an aqueous dispersion of titanium oxide particles, and the dispersion medium of the aqueous dispersion is replaced by an alcohol, the titanium oxide particles agglomerate and grow to larger particles, and as a result, the obtained alcohol dispersion is remarkably impaired in transparency.

EP 2 206 682 A1 discloses an organic dispersion containing flaky titanium oxide as well as a method for producing the same.

GB 2 226 018 A discloses an aqueous dispersion of titanium dioxide and a method for the manufacture of the same.

### PRIOR ART DOCUMENTS

### PATENT LITERATURES

Patent Literature 1: International Publication WO2012/023621

### SUMMARY OF THE INVENTION

### PROBLEMS TO BE SOLVED BY THE INVENTION

The invention has been completed to solve the above-mentioned problems involved in the method of obtaining an alcohol dispersion of titanium oxide particles by replacing the dispersion medium of the aqueous dispersion of titanium oxide particles with an alcohol.

Therefore, it is an object of the invention to provide a method of producing an aqueous dispersion of titanium oxide particles which provides an alcohol dispersion of titanium oxide particles in which the dispersion diameter of the particles in the aqueous dispersion and the transparency of the aqueous dispersion are substantially maintained.

It is a further object of the invention to provide a method for producing an alcohol dispersion of titanium oxide particles, in which the aqueous dispersion of titanium oxide particles is used as a starting material, whose dispersion medium is replaced by an alcohol, and the dispersion diameter of titanium oxide particles and the transparency of the aqueous dispersion of titanium oxide particles are substantially maintained in the alcohol dispersion of titanium oxide particles thus obtained.

Also disclosed herein is an aqueous dispersion and an alcohol dispersion of titanium oxide particles obtained by the above-mentioned method.

### MEANS TO SOLVE THE PROBLEMS

The invention provides a method for producing an aqueous dispersion of titanium oxide particles which comprises:
(a) a first step for subjecting an aqueous slurry of titanium oxide particles to wet dispersing treatment in the presence of 15 to 250 parts by mole of acetic acid and 15 to 90 parts by mole of nitric acid each relative to 100 parts by mole of titanium oxide with a medium agitating mill or a high pressure dispersing machine to obtain an aqueous dispersion of titanium oxide particles before washing, and
(b) a second step for washing the aqueous dispersion of titanium oxide particles before washing obtained in the first step (a) to obtain an aqueous dispersion of titanium oxide particles.

A third step (step (c)) for replacing water that is the dispersion medium of the aqueous dispersion of titanium oxide particles obtained in the second step (b) by at least one alcohol solvent selected from the group consisting of methanol and ethanol, may be used to produce an alcohol dispersion of titanium oxide particles.

Thus the invention further provides a method for producing an alcohol dispersion of titanium oxide particles which comprises:
(a) first step for subjecting an aqueous slurry of titanium oxide particles to wet dispersing treatment in the presence of 15 to 250 parts by mole of acetic acid and 15 to 90 parts by mole of nitric acid each relative to 100 parts by mole of titanium oxide with a medium agitating mill or a high pressure dispersing machine to obtain an aqueous dispersion of titanium oxide particles before washing,
(b) a second step for washing the aqueous dispersion of titanium oxide particles before washing obtained in the first step (a) to obtain an aqueous dispersion of titanium oxide particles, and
(c) a third step for replacing water that is the dispersion medium of the aqueous dispersion of titanium oxide particles obtained in the second step (b) by at least one alcohol solvent selected from the group consisting of methanol and ethanol.

Also disclosed herein is an aqueous dispersion and an alcohol dispersion of titanium oxide particles obtained by the above-mentioned methods.

### EFFECT OF THE INVENTION

According to the invention, there is obtained an aqueous dispersion of titanium oxide particles which provides an alcohol dispersion of titanium oxide particles in which the dispersion diameter of titanium oxide particles in the aqueous dispersion and the transparency of the aqueous dispersion are substantially maintained.

Further according to the invention, such an aqueous dispersion of titanium oxide particles as mentioned above is used as a starting material, and the dispersion medium of the aqueous dispersion of titanium oxide particles is replaced by an alcohol, and as a result, there is obtained an alcohol dispersion of titanium oxide particles which substantially maintains the dispersion diameter of titanium oxide particles in the aqueous dispersion and transparency of the aqueous dispersion.

Therefore, according to the invention, an aqueous dispersion of titanium oxide particles is used as a starting material whose dispersion diameter is small and which is superior in transparency, and an alcohol dispersion of fine titanium oxide particles is obtained in which the small dispersion diameter and transparency of the aqueous dispersion of titanium oxide particles is substantially maintained.

### EMBODIMENTS OF THE INVENTION

The method for producing an aqueous dispersion of titanium oxide particles of the invention comprises:
(a) a first step for subjecting an aqueous slurry of titanium oxide particles to wet dispersing treatment in the presence of 15 to 250 parts by mole of acetic acid and 15 to 90 parts by mole of nitric acid each relative to 100 parts by mole of titanium oxide with a medium agitating mill or a high pressure dispersing machine to obtain an aqueous dispersion of titanium oxide particles before washing, and
(b) a second step for washing the aqueous dispersion of titanium oxide particles before washing obtained in the first step (a) to obtain an aqueous dispersion of titanium oxide particles.

In the invention, the crystal form of titanium oxide particles used is not particularly limited, and may be rutile, anatase, brookite or a mixture of these, but is preferably rutile or anatase.

Also in the invention, the aqueous slurry of titanium oxide particles is not particularly limited in the method of its production and origin. However, the aqueous slurry of titanium oxide particles obtained by the following method is an example of aqueous slurry of titanium oxide particles which is preferably used in the method of the invention.

That is, the aqueous slurry of titanium oxide particles preferably used in the method of the invention is produced by the method as follows:
(1) a first step in which a chloride ion concentration of an aqueous solution of titanium tetrachloride is adjusted to 0.5 mole/L or more, and less than 4.4 mole/L, and then the aqueous solution of titanium tetrachloride is heated at a temperature in a range of from 25°C to 75°C to hydrolyze the titanium tetrachloride, thereby obtaining an aqueous slurry containing the thus precipitated rutile titanium oxide particles;
(2) a second step in which the aqueous slurry obtained in the first step is filtered and washed with water to remove water-soluble salts dissolved therein from the aqueous slurry;
(3) a third step in which the aqueous slurry obtained in the second step is subjected to a hydrothermal reaction in the presence of an organic acid; and
(4) a fourth step in which the aqueous slurry obtained in the third step is filtered and washed with water to remove water-soluble salts dissolved therein from the aqueous slurry, and the titanium oxide particles thus obtained are repulped in water.

The first step is a step in which titanium tetrachloride is hydrolyzed in water so that particles of rutile titanium oxide are precipitated, thereby to obtain a slurry containing such particles of rutile titanium oxide. In more detail, in the first step, water is added to an aqueous solution of titanium tetrachloride so that it has a content of titanium oxide (TiO₂, hereinafter the same) in a range of 10 to 100 g/L, and a chloride ion concentration of 0.5 mole/L or more, and less than 4.4 mole/L. Subsequently, the aqueous solution is heated at a temperature in a range of 25-75°C for 1-10 hours, although not limited, so that the titanium tetrachloride is hydrolyzed and rutile titanium oxide particles are precipitated.

Upon such hydrolysis of titanium tetrachloride as mentioned above, when the chloride ion concentration of the aqueous solution of titanium tetrachloride is 4.4 mole/L or more, it is difficult to hydrolyze the aqueous solution of titanium tetrachloride at a practical rate at a hydrolysis temperature of 75°C or less. On the other hand, when the chloride ion concentration of the aqueous solution of titanium tetrachloride is less than 0.5 mole/L, the concentration is too small to hydrolyze the aqueous solution of titanium tetrachloride in an industrial scale, that is, such a hydrolysis process is neither efficient nor practical.

When the hydrolysis temperature of aqueous solution of titanium tetrachloride is more than 75°C, the hydrolysates of titanium tetrachloride formed often get mixed with anatase titanium oxide or brookite titanium oxide if the chloride ion concentration of the aqueous solution of titanium tetrachloride is adjusted at 0.5 mole/L or more, and less than 4.4 mole/L.

The hydrolysis rate of titanium tetrachloride depends on hydrolysis temperature, and the higher the temperature, the higher the hydrolysis rate. Therefore, a higher temperature is industrially advantageous. When the hydrolysis temperature is less than 25°C, it is difficult to carry out the hydrolysis of titanium tetrachloride at a practical rate.

It is particularly preferred that in the first step, water is added to an aqueous solution of titanium tetrachloride to adjust the chloride ion concentration of the solution at 1.0 mole/L or more, and 4.3 mole/L or less, and then the solution is heated at a temperature of 30-75°C for 1-5 hours, although not limited, thereby to hydrolyze titanium tetrachloride and precipitate rutile titanium oxide particles.

The second step is a step in which the slurry obtained in the first step is filtered and washed with water to remove water-soluble salts dissolved therein from the slurry. In the second step, although the means and procedures for filtering and washing the slurry with water are not particularly limited, but the slurry can be efficiently filtered and washed with water by adding a suitable alkali to the slurry before it is filtered to adjust the pH to an isoelectric point of titanium oxide.

The third step is a step in which the slurry obtained in the second step is subjected to a hydrothermal reaction in the presence of an organic acid, which is a particle growth inhibiting agent, to increase the crystallinity of the rutile titanium oxide particles, while the particle growth is inhibited. As the organic acid, carboxylic acids and hydroxycarboxylic acids are used, and their salts may also be used. Concrete examples of the organic acid may include monocarboxylic acids such as formic acid, acetic acid, and propionic acid, and their salts; polybasic acids such as oxalic acid, malonic acid, succinic acid, fumaric acid, and maleic acid, and their salts; hydroxycarboxylic acids such as lactic acid, malic acid, tartaric acid, citric acid, and gluconic acid, and their salts. As the salts of the carboxylic acid and the hydroxycarboxylic acid, for example, alkali metal salts such as sodium salts and potassium salts are preferably used.

In the third step, by using the organic acid in an amount of 75 parts by mole or more per 100 parts by mole of titanium oxide, the crystallinity of rutile titanium oxide particles obtained by the hydrothermal reaction is effectively increased while the growth of rutile titanium oxide particles obtained is inhibited. When the amount of the organic acid is less than 75 parts by mole per 100 parts by mole of titanium oxide, the effect for inhibiting the growth of rutile titanium oxide particles is not obtained in the hydrothermal reaction. A preferred amount of the organic acid is 85 parts by mole or more per 100 parts by mole of titanium oxide. On the other hand, the upper limit of the amount of the organic acid used relative to titanium oxide is not particularly limited, but even if a too much amount of the organic acid is used, the effect for increasing the crystallinity of rutile titanium oxide particles is not improved any more. Therefore, an amount of 200 parts by mole or less of the organic acid per 100 parts by mole of titanium oxide is usually enough.

In the third step, the temperature at which the hydrothermal reaction is performed is in a range of 120 to 180°C. When the temperature is lower than 120°C, the crystallinity of rutile titanium oxide particles obtained does not increase. On the other hand, when it is higher than 180°C, the particles grow remarkably. That is, it is difficult to increase the crystallinity of the particles while the particle growth is inhibited. In particular, according to the invention, it is advantageous to perform the hydrothermal reaction at a temperature in a range of 140 to 160°C because not only the crystallinity of rutile titanium oxide particles obtained increases while the growth of rutile titanium oxide particles is inhibited, but also the effects described above are obtained in a short time.

The fourth step is a step in which an aqueous solution of a suitable water-soluble alkali such as sodium hydroxide is added to the slurry obtained by the hydrothermal reaction to neutralize the organic acid in the slurry, and then the slurry is filtered and washed with water to remove the water-soluble salts dissolved therein from the slurry, followed by repulping the resultant in water to obtain the intended aqueous slurry of titanium oxide particles.

In the fourth step, the means and procedures for filtering and washing the slurry with water are not also particularly limited, but as mentioned above, the slurry is efficiently filtered and washed with water by adding a suitable alkali to the slurry before it is filtered to adjust the pH of the slurry to an isoelectric point of titanium oxide. In the fourth step, it is further preferable that the slurry is filtered and washed with water so that the slurry has an electric conductivity of 100 µS/cm or less when the slurry is repulped in water so that it has a concentration of 100 g/L of rutile titanium oxide particles.

According to the invention, it is preferred that the aqueous slurry of titanium oxide particles is obtained as described above, and then it is subjected to the steps (a) to (c) as mentioned hereinbefore to obtain the alcohol dispersion of titanium oxide particles.

The step (a) mentioned hereinbefore is a step in which acetic acid and nitric acid are added to the aqueous slurry of titanium oxide particles to deflocculate the slurry, and then the resultant is subjected to a wet dispersion treatment to obtain an aqueous dispersion of titanium oxide particles.

According to the invention, as described above, acetic acid and nitric acid are added to the aqueous slurry of titanium oxide particles and the titanium oxide particles are deflocculated, and then the resultant is subjected to a wet dispersing treatment. Therefore, even if the proportion of the alcohol as the dispersion medium in the obtained dispersion increases when water, i.e., the dispersion medium of the aqueous slurry of titanium oxide particles is replaced by the alcohol in the step (c), there is obtained an alcohol dispersion of titanium oxide particles superior in dispersibility and transparency while suppressing agglomeration of the titanium oxide particles in the resulting dispersion.

When nitric acid alone is added to the aqueous slurry of titanium oxide particles to deflocculate the titanium oxide particles, and then the resultant is subjected to wet dispersion treatment, there arises a problem that as the proportion of the alcohol as the dispersion medium increases in the dispersion obtained, the titanium oxide particles agglomerate in the dispersion, and the transparency of the dispersion is impaired when water, i.e., the dispersion medium of the aqueous slurry is replaced by the alcohol.

On the other hand, when only acetic acid is added to the aqueous slurry of titanium oxide particles to deflocculate the titanium oxide particles, and the resultant is subjected to wet dispersion treatment, the resulting dispersion suffers increase of viscosity, and finally it loses fluidity and gels as the water-soluble salts are removed from the dispersion in the step (b).

According to the invention, when acetic acid and nitric acid are added to the aqueous slurry of titanium oxide particles to deflocculate the titanium oxide particles, acetic acid is used in a range of 15 to 250 parts by mole, and nitric acid in a range of 15 to 90 parts by mole, each in relation to 100 parts by mole of titanium oxide.

The wet dispersion treatment in the step (a) employs a medium agitating mill or a high pressure dispersing machine. A bead mill is preferably used as the medium agitating mill, for example. As the beads, those having a Mohs hardness higher than that of titania is preferable, and for example, zirconia beads are preferably used. According to a preferred embodiment, zirconia beads having a diameter of 15 to 300 µm are charged in a bead mill and the aqueous slurry of titanium oxide is subjected to wet dispersion treatment to obtain an aqueous dispersion of rutile titanium oxide particles.

The step (b) is a step of removing excess acids and the water-soluble salts dissolved in the aqueous dispersion obtained in the step (a) so as to impart dispersion stability to the dispersion obtained in the step (a). Means and methods for removing the water-soluble salts dissolved in the aqueous dispersion are not particularly limited, but dialysis, ultrafiltration or the like are used, for example.

Since the aqueous dispersion of titanium oxide obtained in the step (a) contains acetic acid and nitric acid used as a deflocculant, it has an electrical conductivity usually larger than 10 mS / cm. However, as the aqueous dispersion of titanium is washed to have an electric conductivity in a range of 0.5 to 5 mS / cm, preferably in a range of 1 to 4 mS / cm in the step (b), an aqueous dispersion of titanium oxide particles superior in dispersion stability is obtained.

As described above, titanium tetrachloride is hydrolyzed in an aqueous solution to precipitate rutile titanium oxide particles, which are then hydrothermally treated in the presence of an organic acid to improve the crystallinity of the particles while suppressing the growth of the particles, and then a combination of acetic acid and nitric acid is added to the aqueous slurry of the thus obtained rutile titanium oxide particles to deflocculate the particles, and then the resultant is subjected to wet dispersing treatment, followed by washing the thus obtained aqueous dispersion to have an electrical conductivity in such a range as mentioned above thereby removing an excessive amount of the acids and the water-soluble salts dissolved therein. Thus, an aqueous dispersion of rutile titanium oxide particles is obtained in which the rutile titanium oxide particles are stably dispersed without agglomeration. Then, by replacing the dispersion medium of the thus obtained aqueous dispersion by an alcohol, an alcohol dispersion of titanium oxide particles which substantially maintains the dispersion diameter of fine titanium oxide particles and a high transparency of the aqueous dispersion is obtained.

That is, according to the method described above, starting from titanium tetrachloride, an aqueous dispersion of titanium oxide particles which comprises fine titanium oxide particles of a small dispersion diameter and is superior in transparency is obtained. The aqueous dispersion of titanium oxide particles thus obtained has a content of titanium oxide particles of 10% by weight or more, a total light transmittance of 50% or more, and a viscosity of 10 mPa·s or less at a temperature of 25°C. The titanium oxide particles in the dispersion have a D50 in a range of 1 to 20 nm, preferably in a range of 2 to 10 nm, a D90 of 40 nm or less, and a D100 preferably of less than 80 nm, based on the particle size distribution measured by the dynamic light scattering method.

According to the invention, in particular, also by using nitric acid in an amount of 15 to 90 parts by mole, preferably 20 to 80 parts by mole, in combination with acetic acid in an amount more than 100 parts by mole, for example, in an amount of 110 to 200 parts by mole, each relative to 100 parts by mole of titanium oxide, the resulting aqueous dispersion of titanium oxide particles provides an alcohol dispersion in which a fine dispersion diameter of titanium oxide particles in the aqueous dispersion and a high transparency of the aqueous dispersion are substantially maintained when the dispersion medium of the aqueous dispersion is replaced by an alcohol.

Thus, according to the invention, by replacing the dispersion medium of the aqueous dispersion of titanium oxide particles obtained as described above, that is, water, by an alcohol solvent, there is obtained an alcohol dispersion of titanium oxide particles which has a content of 10% by weight or more of titanium oxide particles, a total light transmittance of 50% or more, and a viscosity of 10 mPa·s or less at a temperature of 25°C, and the titanium oxide particles in the aqueous dispersion have a D50 in a range of 1 to 20 nm, preferably 2 to 10 nm, a D90 of 40 nm or less, and a D100 preferably of 80 nm or less.

### EXAMPLES

The invention is described below in detail with reference to examples, but the invention is not limited to these examples.

Hereinafter, ultrafiltration was conducted using "Microza" manufactured by Asahi Kasei Chemicals Corporation (Model ACP-1010D, molecular weight cutoff 13000). The dispersion diameter of titanium oxide particles was measured by a dynamic light scattering method (using Model UPA-UT manufactured by Nikkiso Co., Ltd.).

The total light transmittance of dispersion of titanium oxide particles was measured using a haze meter (Model NDH4000 manufactured by Nippon Denshoku Industries Co., Ltd.). The light transmittance To (blank level) was measured with the cell having an optical path length of 10 mm filled with ion exchange water, and the light transmittance T with the cell filled with the dispersion. The total light transmittance of dispersion was calculated based on an equation: (T/T₀) × 100.

The viscosity was measured using a turning fork vibration SV viscometer (Model SV-1A manufactured by A&D Company, Limited (measurable viscosity ranging from 0.3 to 1000 mPa·s)).

The electric conductivity was measured with a portable electric conductivity meter (CM-31P manufactured by Toa DKK K.K.).

### Reference Example 1

### (Preparation of aqueous slurry of rutile titanium oxide particles A):

In a separable flask equipped with a reflux apparatus were placed 3 L of aqueous solution of titanium tetrachloride having a chloride ion concentration of 2.3 mole/L and a titanium ion concentration of 50.7 g/L in terms of titanium oxide, and heated at a temperature of 70°C for 3 hours so that the titanium tetrachloride was hydrolyzed, thereby an aqueous slurry containing the thus precipitated rutile titanium oxide particles was obtained (first step).

The slurry was filtered through a filter paper made of glass fiber having a collection diameter of 300 nm to remove unreacted titanium tetrachloride and components dissolved therein. The thus obtained rutile titanium oxide particles were repulped in water to prepare an aqueous slurry, and an aqueous solution of sodium hydroxide was added to the aqueous slurry until it reached a pH of 7.0. The resulting slurry was then filtered through a filter paper made of glass fiber having a collection diameter of 300 nm, wherein the slurry was filtered and washed repeatedly with water to remove water-soluble salts dissolved therein from the slurry so that when the rutile titanium oxide particles obtained were repulped in water in an amount of 50 g/L in terms of titanium oxide, the resulting slurry came to have an electric conductivity of 100 µS/cm or less (second step).

The rutile titanium oxide particles obtained in the second step were repulped in water so that the resulting slurry had a content of 50 g/L of rutile titanium oxide in terms of titanium oxide. Acetic acid was added to the slurry in an amount of 150 parts by mole per 100 parts by mole of the titanium oxide in the slurry. The resulting mixture was subjected to a hydrothermal reaction at 150°C for 3 hours to increase the crystallinity of rutile titanium oxide particles (third step).

An aqueous solution of sodium hydroxide was added to the slurry obtained by the hydrothermal reaction described above until the slurry had a pH of 5.0. The slurry was then filtered through a filter paper made of glass fiber having a collection diameter of 300 nm, wherein the slurry was filtered and washed repeatedly with water to remove water-soluble salts dissolved therein from the slurry so that when the rutile titanium oxide particles obtained were repulped in water in an amount of 100 g/L in terms of titanium oxide, the resulting slurry had an electric conductivity of 100 µS/cm or less. The thus obtained rutile titanium oxide particles were repulped in water in an amount of 100 g/L in terms of titanium oxide to obtain an aqueous slurry of rutile titanium oxide particles (fourth step).

### Example 1

In order to deflocculate the aqueous slurry of rutile titanium oxide particles (A) obtained in Reference Example 1, 152 parts by mole of acetic acid and 52 parts by mole of nitric acid relative to 100 parts by mole of titanium oxide were added thereto, and then the resulting aqueous slurry was diluted with water so as to have a content of 50 g/L in terms of titanium oxide.

2 L of the aqueous slurry thus obtained was subjected to wet dispersion treatment for 18 hours using a circulating bead mill "Ultra Apex Mill UAM-05" manufactured by Kotobuki Kogyo K.K. to obtain an aqueous dispersion of rutile titanium oxide particles. In the wet dispersion treatment, there were used zirconia beads having a diameter of 30 µm and a rotation rate of the bead mill of 2940 rpm.

The aqueous dispersion of rutile titanium oxide particles was concentrated to a content of rutile titanium oxide particles of 15% by weight and washed with an ultrafiltration membrane until it had an electric conductivity of 3.2 mS / cm to remove excess acids and water-soluble salts, thereby to obtain an aqueous dispersion of titanium oxide (1-Ia).

500 g of the aqueous dispersion of titanium oxide particles (1-Ia) was concentrated using an ultrafiltration membrane, while the same amount of methanol as the amount of the filtrate obtained was added to the concentrated dispersion thus obtained. In this way, the dispersion was concentrated while it was diluted with methanol simultaneously and consecutively in parallel thereby maintaining the content of titanium oxide particles in the dispersion at 15% by weight while the dispersion medium of the dispersion, i.e., water, was replaced by methanol, to provide a methanol dispersion of titanium oxide particles (1-IIa) having a content of 15% by weight of titanium oxide particles. The methanol used for the dilution amounted to 2 L.

### Examples 2 to 9

Except that aqueous slurry of rutile titanium oxide particles (A) obtained in Reference Example 1 was deflocculated with acetic acid and nitric acid each in an amount shown in Table 1 relative to 100 parts by mole of titanium oxide, and otherwise in the same manner as in Example 1, aqueous dispersions of titanium oxide (2-Ia to 9-Ia) and methanol dispersions of titanium oxide (2-IIa to 9-IIa) were obtained.

### Example 10

An aqueous slurry of anatase titanium oxide particles (CSB-M manufactured by Sakai Chemical Industry, Co., Ltd.) was diluted with water to an aqueous slurry (B) having a content of titanium oxide of 100 g/L. The aqueous slurry of titanium oxide particles was deflocculated with 152 parts by mole of acetic acid and 52 parts by mole of nitric acid relative to 100 parts by mole of titanium oxide and then the aqueous slurry was diluted with water so as to have a content of 50 g/L in terms of titanium oxide.

2 L of the aqueous slurry thus obtained was subjected to wet dispersion treatment for 18 hours using a circulating bead mill "Ultra Apex Mill UAM-05" manufactured by Kotobuki Kogyo K.K. to obtain an aqueous dispersion of anatase titanium oxide particles. In the wet dispersion treatment, there were used zirconia beads having a diameter of 30 µm and a rotation rate of the bead mill of 2940 rpm.

The aqueous dispersion of anatase titanium oxide particles was concentrated to a content of titanium oxide particles of 15% by weight and washed with an ultrafiltration membrane until it had an electric conductivity of 3.8 mS / cm to remove excess acids and water-soluble salts, thereby to obtain an aqueous dispersion of titanium oxide (10-Ia).

500 g of the aqueous dispersion of titanium oxide particles (10-Ia) was concentrated using an ultrafiltration membrane, while the same amount of methanol as the amount of the filtrate obtained was added to the concentrated dispersion thus obtained. In this way, the dispersion was concentrated while it was diluted with methanol simultaneously and consecutively in parallel thereby maintaining the content of titanium oxide particles in the dispersion at 15% by weight while the dispersion medium of the dispersion, i.e., water, was replaced by methanol, to provide a methanol dispersion of titanium oxide particles (10-IIa) having a content of 15% by weight of titanium oxide particles. The methanol used for the dilution amounted to 2 L.

### Comparative Example 1

The aqueous slurry of rutile titanium oxide particles (A) obtained in Reference Example 1 was deflocculated with 52 parts by mole of nitric acid relative to 100 parts by mole of titanium oxide, and then the aqueous slurry was diluted with water so as to have a content of 50 g/L in terms of titanium oxide.

2 L of the aqueous slurry thus obtained was subjected to wet dispersion treatment for 18 hours using a circulating bead mill "Ultra Apex Mill UAM-05" manufactured by Kotobuki Kogyo K.K. to obtain an aqueous dispersion of rutile titanium oxide particles. In the wet dispersion treatment, there were used zirconia beads having a diameter of 30 µm and a rotation rate of the bead mill of 2940 rpm.

The aqueous dispersion of rutile titanium oxide particles was concentrated to a content of rutile titanium oxide particles of 15% by weight and washed with an ultrafiltration membrane until it had an electric conductivity of 3.7 mS / cm to remove excess acids and water-soluble salts, thereby to obtain an aqueous dispersion of titanium oxide (1-Ib).

500 g of the aqueous dispersion of titanium oxide particles (1-Ib) was concentrated using an ultrafiltration membrane, while the same amount of methanol as the amount of the filtrate obtained was added to the concentrated dispersion thus obtained. In this way, the dispersion was concentrated while it was diluted with methanol simultaneously and consecutively in parallel thereby maintaining the content of titanium oxide particles in the dispersion at 15% by weight while the dispersion medium of the dispersion, i.e., water, was replaced by methanol, to provide a methanol dispersion of titanium oxide particles (1-IIb) having a content of 15% by weight of titanium oxide particles. The methanol used for the dilution amounted to 2 L.

The aqueous dispersion of the titanium oxide particles (1-Ib) obtained was found to have a low transmittance, a large dispersion diameter, and a poor transparency. Furthermore, in the methanol dispersion of titanium oxide particles (1-IIb) obtained by replacing the dispersion medium of the aqueous dispersion, i.e., water, the titanium oxide particles agglomerated, and the dispersion diameter remarkably enlarged, and the dispersion was inferior in transparency.

### Comparative Example 2

The aqueous slurry of rutile titanium oxide particles (A) obtained in Reference Example 1 was deflocculated with 152 parts by mole of acetic acid relative to 100 parts by mole of titanium oxide, and then the aqueous slurry was diluted with water so as to have a content of 50 g/L in terms of titanium oxide.

2 L of the aqueous slurry thus obtained was subjected to wet dispersion treatment for 18 hours using a circulating bead mill "Ultra Apex Mill UAM-05" manufactured by Kotobuki Kogyo K.K. to obtain an aqueous dispersion of rutile titanium oxide particles. In the wet dispersion treatment, there were used zirconia beads having a diameter of 30 µm and a rotation rate of the bead mill of 2940 rpm.

In the course of concentrating to a content of rutile titanium oxide particles of 15% by weight and washing with an ultrafiltration membrane to remove excess acids and water-soluble salts, the aqueous dispersion of rutile titanium oxide particles thus obtained increased in viscosity and gelled.

### Comparative Examples 3 to 6

Except that aqueous slurry of rutile titanium oxide particles (A) obtained in Reference Example 1 was deflocculated with acetic acid and nitric acid each in an amount shown in Table 2 relative to 100 parts by mole of titanium oxide, and otherwise in the same manner as in Example 1, aqueous dispersions of titanium oxide (3-Ib to 6-Ib) and methanol dispersions of titanium oxide (3-IIb to 6-IIb) were obtained.

The crystal form of titanium oxide used in the above Examples and Comparative Examples, the kind and amount of acid used in the wet dispersion treatment (deflocculation) of the aqueous slurry of titanium oxide particles in the first step, the electrical conductivity of aqueous slurry of titanium oxide particles after it was washed in the second step, and the titanium oxide content, the total light transmittance, the viscosity at 25°C, and the dispersion diameter D50, D90 and D100 of titanium oxide particles of the aqueous dispersions and the methanol dispersions of titanium oxide particles obtained in the above-mentioned Examples and Comparative Examples are shown in Table 1 and Table 2. The dispersion diameters were obtained based on the particle size distribution measurement by the scattering method.

### [Table 1]

**Table 1**

| | Crystal Form of Titanium Oxide | Amount of Acids on Dispersion Treatment | | Electrical Conductivity (mS/cm) | Dispersion of Titanium Oxide | Concentration (wt%) | Transmittance (%) | Viscosity (25°C) (mPa·s) | Dispersion Diameter Measured by Dynamic Light Scattering Method | | |
|---|---|---|---|---|---|---|---|---|---|---|---|
| | | Acetic Acid (parts by mole) | Nitric Acid (parts by mole) | | | | | | | | |
| | | | | | | | | | D50 (nm) | D90 (nm) | D100 (nm) |
| Example 1 | Rutile | 152 | 52 | 3.2 | Aqueous Dispersion (1-Ia) | 15.6 | 82 | 3.0 | 3.4 | 6.7 | 21.5 |
| | | | | - | Methanol Dispersion (1-IIa) | 15.6 | 80 | 1.1 | 3.4 | 6.3 | 25.5 |
| Example 2 | Rutile | 30 | 30 | 3.2 | Aqueous Dispersion (2-Ia) | 15.6 | 61 | 2.9 | 6.3 | 13.7 | 43.0 |
| | | | | - | Methanol Dispersion (2-IIa) | 15.3 | 63 | 1.4 | 5.4 | 11.0 | 36.1 |
| Example 3 | Rutile | 50 | 50 | 3.4 | Aqueous Dispersion (3-Ia) | 15.8 | 66 | 3.2 | 4.2 | 7.3 | 36.1 |
| | | | | - | Methanol Dispersion (3-IIa) | 15.6 | 69 | 1.4 | 4.0 | 6.8 | 30.4 |
| Example 4 | Rutile | 80 | 20 | 3.7 | Aqueous Dispersion (4-Ia) | 15.1 | 55 | 2.2 | 8.4 | 17.3 | 51.1 |
| | | | | - | Methanol Dispersion (4-IIa) | 15.4 | 58 | 1.2 | 6.3 | 13.7 | 43.0 |
| Example 5 | Rutile | 20 | 80 | 3.5 | Aqueous Dispersion (5-Ia) | 15.3 | 64 | 2.2 | 5.4 | 11.0 | 36.1 |
| | | | | - | Methanol Dispersion (5-IIa) | 15.4 | 64 | 1.0 | 6.6 | 13.6 | 36.1 |
| Example 6 | Rutile | 125 | 25 | 3.5 | Aqueous Dispersion (6-Ia) | 15.7 | 55 | 2.3 | 9.1 | 18.3 | 60.8 |
| | | | | - | Methanol Dispersion (6-IIa) | 15.3 | 57 | 1.6 | 7.5 | 14.1 | 51.1 |
| Example 7 | Rutile | 132 | 32 | 3.3 | Aqueous Dispersion (7-Ia) | 15.4 | 58 | 2.2 | 6.4 | 13.3 | 43.0 |
| | | | | - | Methanol Dispersion (7-IIa) | 15.5 | 61 | 1.1 | 6.0 | 12.2 | 36.1 |
| Example 8 | Rutile | 142 | 42 | 3.3 | Aqueous Dispersion (8-Ia) | 15.9 | 74 | 3.4 | 3.8 | 6.8 | 25.5 |
| | | | | - | Methanol Dispersion (8-IIa) | 15.2 | 76 | 1.2 | 3.9 | 6.6 | 25.5 |
| Example 9 | Rutile | 162 | 62 | 3.5 | Aqueous Dispersion (9-Ia) | 15.7 | 66 | 2.4 | 4.3 | 8.5 | 30.4 |
| | | | | - | Methanol Dispersion (9-IIa) | 15.2 | 69 | 0.9 | 4.4 | 9.1 | 25.5 |
| Example 10 | Anatase | 152 | 52 | 3.8 | Aqueous Dispersion (10-Ia) | 15.8 | 87 | 2.9 | 2.4 | 4.1 | 21.5 |
| | | | | - | Methanol Dispersion (10-IIa) | 15.9 | 86 | 0.5 | 2.8 | 6.2 | 21.5 |

### [Table 2]

**Table 2**

| | Crystal Form of Titanium Oxide | Amount of Acids on Dispersion Treatment | | Electrical Conductivity | Dispersion of Titanium Oxide | Concentration | Transmittance | Viscosity (25°C) | Dispersion Diameter Measured by Dynamic Light Scattering Method | | |
|---|---|---|---|---|---|---|---|---|---|---|---|
| | | Acetic Acid | Nitric Acid | | | | | | | | |
| | | (parts by mole) | (parts by mole) | | | | | | D50 | D90 | D100 |
| | | | | (mS/cm) | | (wt%) | (%) | (mPa·s) | (nm) | (nm) | (nm) |
| Comparative 1 | Rutile | - | 52 | 3.7 | Aqueous Dispersion (1-Ib) | 15.0 | 28 | 1.6 | 14.7 | 22.7 | 144.5 |
| | | | | - | Methanol Dispersion (1-IIb) | 15.8 | 21 | 0.8 | 28.7 | 49.7 | 204.4 |
| Comparative 2 | Rutile | 152 | - | - | Gelled when desalination and concentration were performed after dispersion treatment | | | | | | |
| Comparative 3 | Rutile | 52 | 152 | 3.2 | Aqueous Dispersion (3-Ib) | 15.7 | 28 | 2.4 | 18.6 | 28.5 | 102.2 |
| | | | | - | Methanol Dispersion (3-IIb) | 15.9 | 21 | 1.1 | 29.3 | 46.5 | 121.5 |
| Comparative 4 | Rutile | 100 | 100 | 3.5 | Aqueous Dispersion (4-Ib) | 15.5 | 43 | 1.7 | 16.8 | 25.8 | 85.9 |
| | | | | - | Methanol Dispersion (4-IIb) | 15.8 | 37 | 0.9 | 17.8 | 28.8 | 85.9 |
| Comparative 5 | Rutile | 300 | 300 | 2.9 | Aqueous Dispersion (5-Ib) | 15.7 | 27 | 1.9 | 19.3 | 33.9 | 102.2 |
| | | | | - | Methanol Dispersion (5-IIb) | 15.8 | 26 | 0.7 | 24.2 | 36.7 | 102.2 |
| Comparative 6 | Rutile | - | 152 | Particles sedimented and badly dispersed after dispersion treatment | | | | | | | |

As is apparent from the results shown in Table 1 and Table 2, according to the invention, acetic acid and nitric acid are added to an aqueous slurry of titanium oxide particles in a predetermined amount in relation to the amount of titanium oxide particles to deflocculate the titanium oxide particles, the resultant is subjected to wet dispersion treatment to obtain an aqueous dispersion of titanium oxide particles, the aqueous dispersion of titanium oxide particles is washed to remove excess acids and water-soluble salts to obtain an aqueous dispersion of titanium oxide particles, and then the dispersion medium of the aqueous dispersion, i.e., water, is replaced by an alcohol.

Thus, as a result, there is obtained an alcohol dispersion of titanium oxide particles in which the fine dispersion diameter of the titanium oxide particles and the superior transparency of the aqueous dispersion of titanium oxide particles are maintained.

In particular, according to the invention, even in the case when more than 100 parts by mole of acetic acid is used relative 100 parts by mole of titanium oxide, when nitric acid is used in a predetermined amount relative 100 parts by mole of titanium oxide in combination with the use of acetic acid to deflocculate the aqueous slurry of titanium oxide particles, and the resultant is subjected to wet dispersion treatment to obtain an aqueous dispersion of titanium oxide particles, followed by being treated in such a manner as mentioned above, there is obtained an alcohol dispersion of titanium oxide particles in which the fine dispersion diameter of the titanium oxide particles and the superior transparency of the aqueous dispersion of titanium oxide particles are maintained.

In addition, preferably when an aqueous slurry of titanium oxide particles is obtained as described above, and the aqueous slurry of titanium oxide particles is deflocculated in the presence of acetic acid and nitric acid according to the invention, subjected to wet dispersion treatment to remove excess acids and water soluble salts, there is obtained an alcohol dispersion of titanium oxide particles which has a high content of fine titanium oxide particles, and yet has a low viscosity, and superior transparency.

As shown in Comparative Example 1, a methanol dispersion of titanium oxide was also obtained by deflocculating the aqueous slurry using only nitric acid, and then replacing the dispersion medium by methanol; however, in the methanol dispersion obtained, the titanium oxide particles remarkably agglomerated to cause the dispersion diameter to enlarge.

In Comparative Example 2, an aqueous dispersion of titanium oxide particles was obtained by deflocculating an aqueous slurry of titanium oxide using only acetic acid, and the resultant is subjected to wet dispersion treatment, to obtain an aqueous dispersion of titanium oxide particles; however, in the course of concentrating and washing by an ultrafiltration membrane to remove excess acids and water soluble salts, the aqueous dispersion was found to increase in viscosity and gel.

However, when nitric acid is used in an amount of 100 parts by mole or more relative to 100 parts by mole of titanium oxide, as shown in Comparative Examples 3 to 5, irrespectively of the amount of acetic acid used, it resulted that in either of the dispersions, the titanium oxide particles remarkably agglomerated to make the dispersion poorly transparent.

When nitric acid only was used in an amount of 100 parts by mole or more relative to 100 parts by mole of titanium oxide to deflocculate the aqueous slurry of titanium oxide particles, followed by subjecting to wet dispersing treatment, coarsely agglomerated particles remained in the slurry, and such particles sedimented when the slurry was left standing, to fail an aqueous dispersion of titanium oxide particles, as shown in Comparative Example 6.

## Claims

1. A method for producing an aqueous dispersion of titanium oxide particles which comprises:
(a) a first step for subjecting an aqueous slurry of titanium oxide particles to wet dispersing treatment in the presence of 15 to 250 parts by mole of acetic acid and 15 to 90 parts by mole of nitric acid each relative to 100 parts by mole of titanium oxide with a medium agitating mill or a high pressure dispersing machine to obtain an aqueous dispersion of titanium oxide particles before washing, and
(b) a second step for washing the aqueous dispersion of titanium oxide particles before washing obtained in the first step (a) to obtain an aqueous dispersion of titanium oxide particles.

2. The method for producing an aqueous dispersion of titanium oxide particles according to claim 1 wherein the aqueous slurry of titanium oxide particles is subjected to wet dispersing treatment in the presence of 110 to 200 parts by mole of acetic acid and 20 to 80 parts by mole of nitric acid each relative to 100 parts by mole of titanium oxide.

3. The method for producing an aqueous dispersion of titanium oxide particles according to claim 1 wherein the aqueous dispersion of titanium oxide particles before washing is washed until the electric conductivity of the aqueous dispersion of titanium oxide particles reaches a range of 0.5 to 5 mS / cm.

4. A method for producing an alcohol dispersion of titanium oxide particles comprising producing an aqueous dispersion according to claim 1 which comprises:
(a) a first step for subjecting an aqueous slurry of titanium oxide particles to wet dispersing treatment in the presence of 15 to 250 parts by mole of acetic acid and 15 to 90 parts by mole of nitric acid each relative to 100 parts by mole of titanium oxide with a medium agitating mill or a high pressure dispersing machine to obtain an aqueous dispersion of titanium oxide particles before washing,
(b) a second step for washing the aqueous dispersion of titanium oxide particles before washing obtained in the first step (a) to obtain an aqueous dispersion of titanium oxide particles, and additionally
(c) a third step for replacing water that is the dispersion medium of the aqueous dispersion of titanium oxide particles obtained in the second step (b) by at least one alcohol solvent selected from the group consisting of methanol and ethanol.

5. The method for producing an alcohol dispersion of titanium oxide particles according to claim 4 wherein the aqueous slurry of titanium oxide particles is subjected to wet dispersing treatment in the presence of 110 to 200 parts by mole of acetic acid and 20 to 80 parts by mole of nitric acid each relative to 100 parts by mole of titanium oxide.

6. The method for producing an alcohol dispersion of titanium oxide particles according to claim 4, wherein in the second step (b) the aqueous dispersion of titanium oxide particles before washing is washed until the electric conductivity of the aqueous dispersion of titanium oxide particles reaches a range of 0.5 to 5 mS / cm.

## Patentansprüche

1. Verfahren zur Herstellung einer wässrigen Dispersion von Titanoxidpartikeln, das Folgendes umfasst:
(a) einen ersten Schritt zum Unterziehen einer wässrigen Aufschlämmung von Titanoxidpartikeln einer Nassdispersionsbehandlung unter Vorhandensein von 15 bis 250 Molteilen Essigsäure und 15 bis 90 Molteilen Salpetersäure, jeweils relativ zu 100 Molteilen Titanoxid, mit einer mittelgroßen Rührmühle oder einer Hochdruckdispergiermaschine, um eine wässrige Dispersion von Titanoxidpartikeln vor dem Waschen zu erhalten, und
(b) einen zweiten Schritt zum Waschen der wässrigen Dispersion von Titanoxidpartikeln vor dem Waschen, erhalten in dem ersten Schritt (a), um eine wässrige Dispersion von Titanoxidpartikeln zu erhalten.

2. Verfahren zur Herstellung einer wässrigen Dispersion von Titanoxidpartikeln nach Anspruch 1, wobei die wässrige Aufschlämmung von Titanoxidpartikeln einer Nassdispersionsbehandlung unter Vorhandensein von 110 bis 200 Molteilen Essigsäure und 20 bis 80 Molteilen Salpetersäure, relativ zu 100 Molteilen Titanoxid, unterzogen wird.

3. Verfahren zur Herstellung einer wässrigen Dispersion von Titanoxidpartikeln nach Anspruch 1, wobei die wässrige Dispersion von Titanoxidpartikeln vor dem Waschen gewaschen wird, bis die elektrische Leitfähigkeit der wässrigen Dispersion von Titanoxidpartikeln einen Bereich von 0,5 bis 5 mS / cm erreicht.

4. Verfahren zur Herstellung einer Alkoholdispersion von Titanoxidpartikeln, umfassend die Herstellung einer wässrigen Dispersion nach Anspruch 1, die Folgendes umfasst:
(a) einen ersten Schritt zum Unterziehen einer wässrigen Aufschlämmung von Titanoxidpartikeln einer Nassdispersionsbehandlung unter Vorhandensein von 15 bis 250 Molteilen Essigsäure und 15 bis 90 Molteilen Salpetersäure, jeweils relativ zu 100 Molteilen Titanoxid, mit einer mittelgroßen Rührmühle oder einer Hochdruckdispergiermaschine, um eine wässrige Dispersion von Titanoxidpartikeln vor dem Waschen zu erhalten,
(b) einen zweiten Schritt zum Waschen der wässrigen Dispersion von Titanoxidpartikeln vor dem Waschen, erhalten in dem ersten Schritt (a), um eine wässrige Dispersion von Titanoxidpartikeln zu erhalten, und zusätzlich
(c) einen dritten Schritt zum Ersetzen von Wasser, das das Dispersionsmedium der im zweiten Schritt (b) erhaltenen wässrigen Dispersion von Titanoxidpartikeln ist, durch mindestens ein alkoholisches Lösungsmittel, das aus der Gruppe ausgewählt ist, die aus Methanol und Ethanol besteht.

5. Verfahren zur Herstellung einer Alkoholdispersion von Titanoxidpartikeln nach Anspruch 4, wobei die wässrige Aufschlämmung von Titanoxidpartikeln einer Nassdispersionsbehandlung unter Vorhandensein von 110 bis 200 Molteilen Essigsäure und 20 bis 80 Molteilen Salpetersäure, jeweils relativ zu 100 Molteilen Titanoxid, unterzogen wird.

6. Verfahren zur Herstellung einer Alkoholdispersion von Titanoxidpartikeln nach Anspruch 4, wobei im zweiten Schritt (b) die wässrige Dispersion von Titanoxidpartikeln vor dem Waschen gewaschen wird, bis die elektrische Leitfähigkeit der wässrigen Dispersion von Titanoxidpartikeln einen Bereich von 0,5 bis 5 mS / cm erreicht.

## Revendications

1. Procédé de production d'une dispersion aqueuse de particules d'oxyde de titane qui comprend :
(a) une première étape pour soumettre une suspension aqueuse de particules d'oxyde de titane à un traitement de dispersion humide en présence de 15 à 250 parties par mole d'acide acétique et de 15 à 90 parties par mole d'acide nitrique chacune par rapport à 100 parties par mole de l'oxyde de titane avec un broyeur à agitation moyenne ou une machine de dispersion à haute pression pour obtenir une dispersion aqueuse de particules d'oxyde de titane avant lavage, et
(b) une deuxième étape de lavage de la dispersion aqueuse de particules d'oxyde de titane avant lavage obtenue à la première étape (a) pour obtenir une dispersion aqueuse de particules d'oxyde de titane.

2. Procédé de production d'une dispersion aqueuse de particules d'oxyde de titane selon la revendication 1, dans lequel la suspension aqueuse de particules d'oxyde de titane est soumise à un traitement de dispersion humide en présence de 110 à 200 parties par mole d'acide acétique et de 20 à 80 parties par mole d'acide nitrique par rapport à 100 parties par mole d'oxyde de titane.

3. Procédé de production d'une dispersion aqueuse de particules d'oxyde de titane selon la revendication 1, dans lequel la dispersion aqueuse de particules d'oxyde de titane avant lavage est lavée jusqu'à ce que la conductivité électrique de la dispersion aqueuse de particules d'oxyde de titane atteigne une plage de 0,5 à 5 mS / cm.

4. Procédé de production d'une dispersion d'alcool de particules d'oxyde de titane comprenant la production d'une dispersion aqueuse selon la revendication 1, qui comprend :
(a) une première étape pour soumettre une suspension aqueuse de particules d'oxyde de titane à un traitement de dispersion humide en présence de 15 à 250 parties par mole d'acide acétique et de 15 à 90 parties par mole d'acide nitrique chacune par rapport à 100 parties par mole de l'oxyde de titane avec un broyeur à agitation moyenne ou une machine de dispersion à haute pression pour obtenir une dispersion aqueuse de particules d'oxyde de titane avant lavage,
(b) une deuxième étape de lavage de la dispersion aqueuse de particules d'oxyde de titane avant lavage obtenue à la première étape (a) pour obtenir une dispersion aqueuse de particules d'oxyde de titane, et en plus
(c) une troisième étape de remplacement de l'eau qui est le milieu de dispersion de la dispersion aqueuse de particules d'oxyde de titane obtenue à la deuxième étape (b) par au moins un solvant alcool choisi dans le groupe constitué par le méthanol et l'éthanol.

5. Procédé de production d'une dispersion d'alcool de particules d'oxyde de titane selon la revendication 4, dans lequel la suspension aqueuse de particules d'oxyde de titane est soumise à un traitement de dispersion humide en présence de 110 à 200 parties par mole d'acide acétique et de 20 à 80 parties par mole d'acide nitrique par rapport à 100 parties par mole d'oxyde de titane.

6. Procédé de production d'une dispersion d'alcool de particules d'oxyde de titane selon la revendication 4, dans lequel dans la deuxième étape (b) la dispersion aqueuse de particules d'oxyde de titane avant lavage est lavée jusqu'à ce que la conductivité électrique de la dispersion aqueuse de particules d'oxyde de titane atteigne une plage de 0,5 à 5 mS / cm.
